Europäisches Patentamt

European Patent Office

Office européen des brevets

(11) Veröffentlichungsnummer: **0 474 170 A2**

## (12) EUROPÄISCHE PATENTANMELDUNG

(21) Anmeldenummer: **91114789.0**

(51) Int. Cl.5: **G01J 5/34**

(22) Anmeldetag: **03.09.91**

(30) Priorität: **06.09.90 DE 9012714 U**

(43) Veröffentlichungstag der Anmeldung:
**11.03.92 Patentblatt 92/11**

(84) Benannte Vertragsstaaten:
**CH DE FR IT LI NL SE**

(71) Anmelder: **HONEYWELL REGELSYSTEME GMBH**
**Kaiserleistrasse 39**
**W-6050 Offenbach am Main(DE)**

(72) Erfinder: **Gohla, Bernward, Dipl.-Ing.**
**Kirnberger Strasse 23**
**W-6100 Darmstadt(DE)**
Erfinder: **Jochlik, Günter, Dipl.-Ing.**
**Bernhardstrasse 28**
**W-8755 Alzenau i. Ufr.(DE)**

(74) Vertreter: **Herzbach, Dieter et al**
**Honeywell Europe S.A. Holding KG Patent & License Dept. Kaiserleistrasse 55 Postfach 10 08 65**
**W-6050 Offenbach am Main(DE)**

(54) **Pyroelektrische Detektoranordnung.**

(57) Eine pyroelektrische Detektoranordnung umfaßt Detektorelemente (18',18'';22') deren spektrale Empfindlichkeit auf eine Infrarot-Störstrahlung abgestimmt sind. Die Detektorelemente sind auf getrennten Detektoren (18;22) angeordnet, wobei ein Strahlteiler (16) angeordnet ist, um dem einen Detektor (18) die Nutzstrahlung und dem anderen Detektor (22) die Störstrahlung zuzuführen.

Fig. 1

Eine derartige pyroelektrische Detektoranordnung dient zum Detektieren und Klassifizieren von Fahrzeugen. Hierbei sind zwei beabstandete Detektorelemente angeordnet, denen Filter vorgeschaltet sind, deren Bandbreite auf die interessierende Wärmestrahlung des zu detektierenden Fahrzeuges abgestimmt ist. Die beabstandete Anordnung von zwei gleichen Detektorelementen erlaubt zudem eine Erkennung der Bewegungsrichtung des zu detektierenden Fahrzeuges. Zur Ausblendung von Störquellen, wie sie z.B. durch ein offenes Feuer vorgegeben sind, ist ein weiteres Detektorelement zwischen den beiden beabstandeten Detektorelementen angeordnet, dem ein Filter vorgeschaltet ist, dessen spektrale Empfindlichkeit auf die Strahlung derartiger Störquellen abgestimmt ist. Bislang hat man die Detektorelemente und die Filter in einem einzigen Transistorgehäuse untergebracht, was insbesondere hinsichtlich der anzubringenden unterschiedlichen Filter zu fertigungstechnischen Schwierigkeiten geführt hat. Ferner sind die Kosten für die Montage und Herstellung der Einzelfilter sehr hoch und es treten Dichtungsprobleme bei den zusammengesetzten Filtern auf.

Es ist daher die Aufgabe der vorliegenden Erfindung, eine pyrotechnische Detektoranordnung der gattungsgemäßen Art so weiterzubilden, daß bei unbeeinträchtigter Funktion eine einfache Fertigung möglich ist. Die Lösung dieser Aufgabe gelingt gemäß den kennzeichnenden Merkmalen des Patentanspruches 1. Weitere vorteilhafte Ausgestaltungen der pyroelektrischen Detektoranordnung gemäß der Erfindung sind den Unteransprüchen entnehmbar.

Anhand eines in den Figuren der beiliegenden Zeichnung dargestellten Ausführungsbeispieles sei im folgenden die Erfindung näher beschrieben. Es zeigen:

Fig. 1      die pyroelektrische Detektoranordnung im Schnitt;

Fig. 2      eine Draufsicht auf einen ersten Detektor; und

Fig. 3      eine Draufsicht auf einen zweiten Detektor.

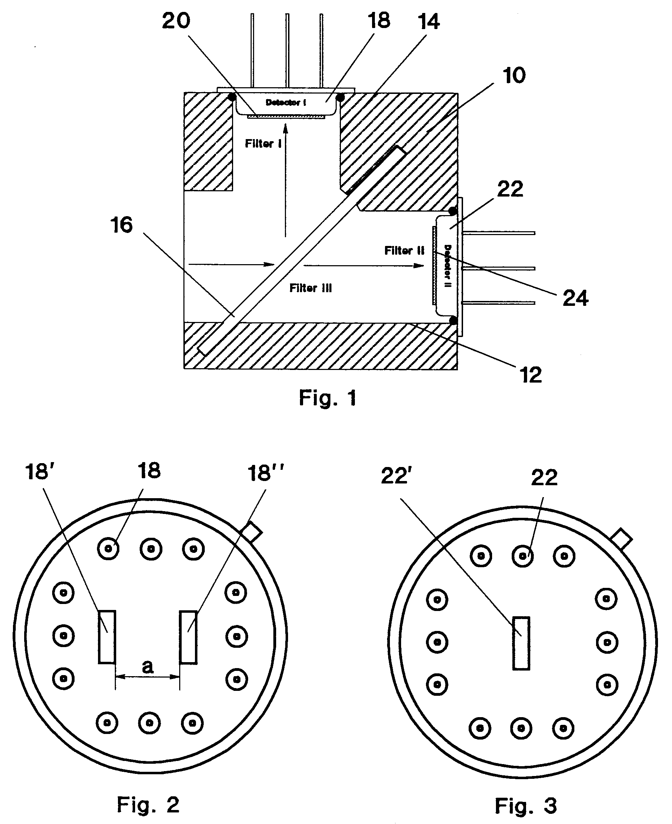

Gemäß Fig. 1 weist ein Gehäuse 10 eine durchgehende Bohrung 12 und eine senkrecht dazu angeordnete Sackbohrung 14 auf. Im Schnittpunkt beider Bohrungen 12, 14 ist ein dichroitischer Spiegel 16 so angeordnet, daß er mit jeder Bohrung einen Winkel von 45° einschließt.

In die Sackbohrung 14 ist bündig mit dem Gehäuse 14 ein erster Detektor 18 eingesetzt, der gemäß Fig. 2 zwei Sensorelemente 18', 18'' in einem vorgegebenen Abstand a aufweist, welche durch eine entsprechende Signalauswertung nicht nur die Erkennung eines Zieles ermöglichen, sondern auch dessen Bewegungsrichtung zu detektieren gestatten. Vor dem Detektor 18 ist ein Filter 20 angeordnet, dessen spektraler Durchlaßbereich (Bandbreite) auf die zu detektierende Strahlung abgestimmt ist. Das Filter 20 bildet hierbei vorzugsweise einen integralen Bestandteil des Detektors 18, wobei die gesamte Anordnung in einem Transistorgehäuse (TO-Gehäuse) angeordnet ist.

In die durchgehende Bohrung 12 ist bündig mit dem Gehäuse 10 ein zweiter Detektor 22 eingesetzt, der gemäß Fig. 3 zentral ein einziges Detektorelement 22' aufweist. Vor dem Detektor 22 ist ein Filter 24 angeordnet, dessen spektraler Durchlaßbereich (Bandbreite) auf die Wellenlänge einer Störstrahlung abgestimmt ist. Auch hier bilden wiederum das Filter 24 und der Detektor 22 ein integrales Bauelement in Form eines Transistorgehäuses.

Der dichroitische Spiegel 16 selbst ist mit einer nichtdargestellten Filterbeschichtung versehen, wodurch der größte Teil (> 98%) der interessierenden Strahlung reflektiert wird und ein hoher Anteil (> 70%) der Störstrahlung durchgelassen wird. Aus herstellungstechnischen Gründen kann auch die interessierende Strahlung durchgelassen und die Störstrahlung reflektiert werden.

Da jeder Detektor nur noch Detektorelemente für einen bestimmten Wellenlängenbereich aufweisen muß, ergeben sich keinerlei fertigungstechnische Probleme mehr bezüglich der Anbringung der Filter vor den Detektoren.

## Patentansprüche

1.      Pyroelektrische Detektoranordnung mit mindestens einem ersten auf eine auszuwertende Infrarot-Strahlung ansprechenden Detektorelement und einem zweiten auf eine Infrarot-Störstrahlung ansprechenden Detektorelement, **dadurch gekennzeichnet**, daß die ersten und zweiten Detektorelemente (18',18'';22') auf getrennten ersten und zweiten Detektoren (18;22) angeordnet sind und daß ein optischer Strahlteiler (16) angeordnet ist, um dem ersten Detektor (18) die auszuwertende Strahlung und dem zweiten Detektor (22) die Störstrahlung zuzuführen.

2.      Detektoranordnung nach Anspruch 1 mit Filtern vor den Detektorelementen, die deren Empfangsbereich vorgeben, **dadurch gekennzeichnet**, daß der Strahlteiler (16) zusätzlich als Filter ausgebildet ist.

3.      Detektoranordnung nach Anspruch 2, **dadurch gekennzeichnet**, daß der Strahlteiler als dichroitisches Filter (16) ausgebildet ist.

4.      Detektoranordnung nach Anspruch 3, **dadurch gekennzeichnet**, daß das dichroitische Filter (16) bezüglich Transmission und Reflexion unterschiedliche Faktoren aufweist.

5. Detektoranordnung nach Anspruch 1, **dadurch gekennzeichnet**, daß die ersten und zweiten Detektoren (18;22) zueinander um 90° versetzt in Bohrungen (12,14) eines Gehäuses (10) angeordnet sind und daß der Strahlteiler (16) unter 45° im Strahlengang im Bereich der sich kreuzenden Bohrungen (12,14) angeordnet ist.

Fig. 1

Fig. 2

Fig. 3